# FASCICULE DE BREVET EUROPEEN

(11) **EP 3 396 150 B1**
(45) Date de publication et mention de la délivrance du brevet: **12.05.2021**
(21) Numéro de dépôt: 18164810.6
(22) Date de dépôt: 28.03.2018
(51) Int. Cl.: F02M 47/02, F02M 63/00, F16F 1/04, F16F 1/12

(54) **INJECTEUR DE CARBURANT**
KRAFTSTOFFINJEKTOR
FUEL INJECTOR

(30) Priorité: 25.04.2017 FR 1753585
(43) Date de publication de la demande: 31.10.2018
(73) Titulaire: Delphi Technologies IP Limited, Saint Michael (BB)
(72) Inventeur: CALONNE, Jérôme, 41000 Blois (FR); LEGRAND, Philippe, 41350 Saint-Gervais-la-Forêt (FR)
(74) Mandataire: BorgWarner France SAS

(56) Documents cités:
- WO-A1-2015/194192
- DE-A1-102004 054 241
- DE-A1-102008 023 296
- FR-A1- 2 941 747
- US-A1- 2007 176 027

## Description

### DOMAINE TECHNIQUE

La présente invention concerne un injecteur de carburant et plus particulièrement un ressort d'aiguille agencé dans une chambre de contrôle.

### ARRIERE-PLAN TECHNOLOGIQUE DE L'INVENTION

Des systèmes d'injection de carburant pour moteurs à combustion interne moderne, en particulier les moteurs à allumage par compression, comprennent une pluralité d'injecteurs de carburant agencés pour émettre un jet atomisé de carburant à haute pression dans une chambre de combustion du moteur.

Un injecteur de carburant connu pour être utilisé dans un tel système Un tel injecteur est connu par exemple du document FR 2 941 747 A. Il comprend une aiguille d'injection. L'aiguille est glissante à l'intérieur de l'alésage formé dans un corps de buse et pouvant coopérer avec un siège pour commander la distribution de carburant à travers une ou plusieurs ouvertures de sortie. Le mouvement de l'aiguille est contrôlé à l'aide d'une chambre de commande à haute pression et d'une chambre à basse pression qui communique avec le réservoir de vidange à basse pression. Lorsqu'au début de l'injection, un actionneur est alimenté électriquement pour réaliser l'ouverture, ce qui entraine le déplacement d'une armature et d'un élément de soupape fixés solidairement à l'armature , l'ensemble étant appelé soupape de commande. La soupape de commande située dans la chambre à basse pression se déplace alors vers le haut contre l'action d'un ressort de bobine de l'actionneur. Le ressort de bobine est agencé dans un alésage borgne central de la bobine. L'alésage a un bord vif à l'entrée du trou. Durant l'assemblage de l'injecteur le tarage du ressort de bobine doit être précise afin de connaître la force de compression du ressort. Cette mesure se trouve erronée lorsque la dernière spire du ressort touche le rebord du trou rendant ensuite l'ajustement des performances de l'injecteur insuffisant. Ce contact entre le ressort et le bord vif de l'alésage est le fait de plusieurs causes telles que la position oblique que peut prendre le ressort dans l'alésage par le jeu de montage mais aussi par le flambage de ce ressort dans son logement, flambage inhérent à la définition géométrique avec un rapport Longueur/Diamètre important du ressort.

L'objet de la présente invention est de fournir une solution qui atténuera le problème mentionné ci-dessus.

### RESUME DE L'INVENTION

La présente invention vise à remédier aux inconvénients mentionnés précédemment en proposant une solution simple et économique.

Dans ce but, l'invention propose un injecteur de carburant d'un moteur à combustion interne qui s'étend le long d'un axe principal et longitudinal X. L'injecteur comprend :
- un ensemble de bobine surmoulé pourvu d'un trou borgne axial s'étendant vers l'intérieur de l'ensemble de bobine,
- un ressort hélicoïdal axialement comprimé dans le trou borgne entre un pion et une tige traversant une armature magnétique.
Le diamètre d'enroulement d'une première spire du ressort en contact avec la tige traversant l'armature magnétique est inférieur au diamètre d'enroulement de la portion centrale de spires du ressort. De plus la première spire est courbée vers l'intérieur d'une longueur angulaire A égale aux derniers 270 degrés. Le diamètre d'enroulement de la première spire est inférieur d'une distance D d'au moins 0,2 mm du diamètre d'enroulement de la portion centrale de spires. La première spire en contact avec l'armature magnétique est aplanie selon un plan perpendiculaire à l'axe principal et longitudinal du ressort. Dans un premier mode de réalisation une première portion extrême de spires du ressort comprend la première spire et plusieurs spires immédiatement consécutives à la première spire, le diamètre d'enroulement des spires de la première portion extrême de spires est égal au diamètre d'enroulement de la première spire. De plus le nombre de spires de la première portion extrême de spires du ressort est compris entre 2 et 10 spires. Dans un autre mode de réalisation le ressort est symétrique par rapport au plan (Y, Z) symétrique à l'axe principal et passant par le milieu du ressort.

### BREVE DESCRIPTION DES DESSINS

D'autres caractéristiques, buts et avantages de l'invention apparaîtront à la lecture de la description détaillée qui va suivre, et en regard des dessins annexés, donnés à titre d'exemple non limitatif et sur lesquels:
La figure 1 est une vue en coupe de l'injecteur.
La figure 2 est une vue en coupe du ressort selon l'invention.
La figure 3 est une vue de dessus du ressort selon un premier mode de réalisation de l'invention.
La figure 4 est une vue de dessus du ressort selon un deuxième mode de réalisation de l'invention.

### DESCRIPTION DES MODES DE REALISATION PREFERES

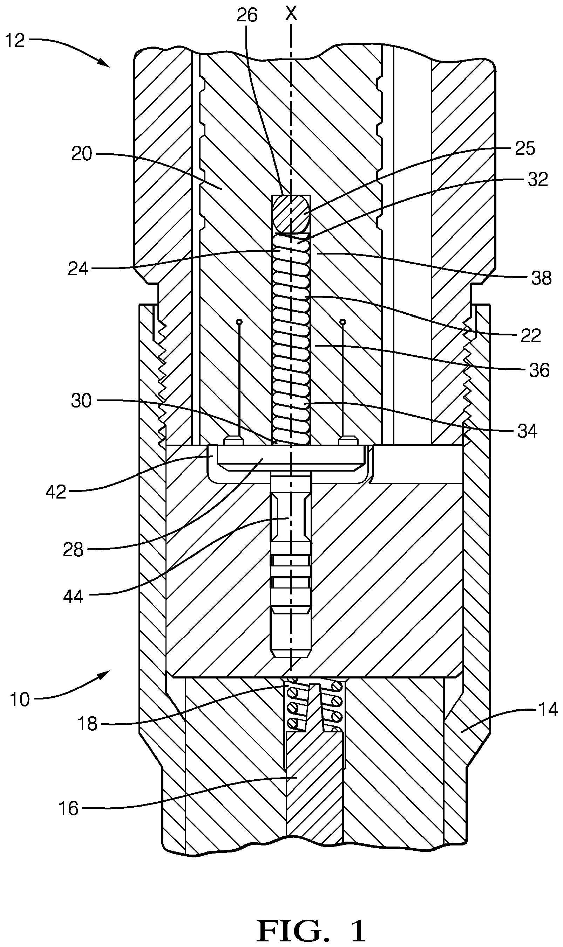

L'invention est maintenant décrite en référence aux figures et dans un but de clarté et de concision de la description une orientation de haut en bas selon le sens de la figure 1 sera utilisé sans aucune intention limitative quant à l'étendue de la protection, notamment au regard des différentes installations d'un injecteur dans un véhicule. Des mots tels que « haut, bas, en dessous, en dessus, vertical, monter, descendre... » seront utilisés sans intention limitative.

Selon la figure 1, est décrit l'invention se rapportant à un injecteur 10 de carburant pour moteur à combustion interne, ici un injecteur diesel bien que l'invention soit intégralement transposable à un injecteur essence ou de tout autre carburant. La description détaillera les éléments de l'invention et restera plus succincte et générale quant aux éléments environnants.

Selon la figure 1, l'injecteur 10 s'étend le long d'un axe longitudinal X. l'injecteur 10 comprend une partie commande comprenant un actionneur 12 piloté par un calculateur (non représenté) agencé dans la partie supérieure de l'injecteur 10 et une partie hydraulique agencée dans la partie inférieure de l'injecteur 10. La partie hydraulique de l'injecteur 10 comprend un corps 14 d'injecteur, une aiguille 16 et une chambre haute pression 18 dans laquelle se trouve une extrémité supérieure de l'aiguille 16.

Selon la figure 1, l'injecteur 10 comprend de plus un ensemble de bobine 20 surmoulé comprenant un trou borgne 22 axial s'étendant vers l'intérieur de l'ensemble de bobine 20. Le trou borgne 22 est adapté pour loger au moins un ressort 24 hélicoïdal axialement comprimé entre un pion 25 logé au fond 26 du trou borgne 22 et le sommet d'une tige 44 traversant une armature 28 magnétique.

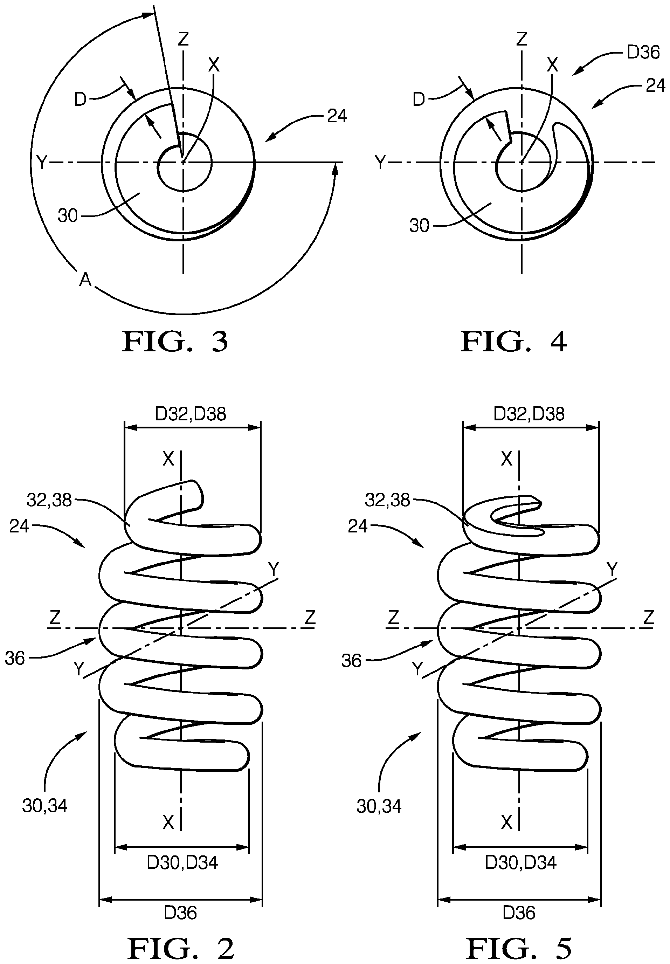

Dans le premier mode de réalisation de l'invention comme représenté dans les figures 1 et 2, le ressort 24 est un ressort hélicoïdal de compression. Le ressort 24 est agencé dans le trou 22 borgne axial. Le ressort 24 hélicoïdal axial s'étend selon l'axe longitudinal X. Le ressort 24 hélicoïdal s'étend entre une première spire 30 en contact avec le sommet de la tige 44 traversant l'armature 28 magnétique et une dernière spire 32 en contact avec le pion 25. Comme représenté dans les figures 1, 2 et 3, une première portion extrême 34 comprend une spire 30 qui est la première spire 30 agencée à une extrémité du ressort 24 hélicoïdal. La première spire 30 est en contact avec le sommet de la tige 44 traversant l'armature 28 magnétique. Comme représenté dans la figure 3, la première spire 30 est courbée vers l'intérieur d'une longueur angulaire A égale aux derniers 270 degrés. Une deuxième portion extrême 38 comprend une spire 32 qui est la dernière spire 32. La première spire 30 a le diamètre d'enroulement D30 inférieur au diamètre d'enroulement D36 de la portion centrale de spires 36. Le diamètre d'enroulement D30 de la première spire 30 est inférieur d'une distance D d'au moins 0,2 mm du diamètre d'enroulement D36 de la portion centrale de spires 36. A titre d'exemple le ressort 24 comprend 10 à 16 spires.

Dans une alternative au premier mode de réalisation comme décrit dans la figure 2, le ressort 24 est symétrique par rapport à un plan (Y, Z) passant par le milieu du ressort 24 et perpendiculaire à l'axe longitudinal X. La première spire 30 et la dernière spire 32 ont le diamètre d'enroulement D30 et D32 inférieur au diamètre d'enroulement D36 de la portion centrale de spires 36. La première spire 30 et la dernière spire 32 sont courbées vers l'intérieur d'une longueur angulaire A égale aux derniers 270 degrés.

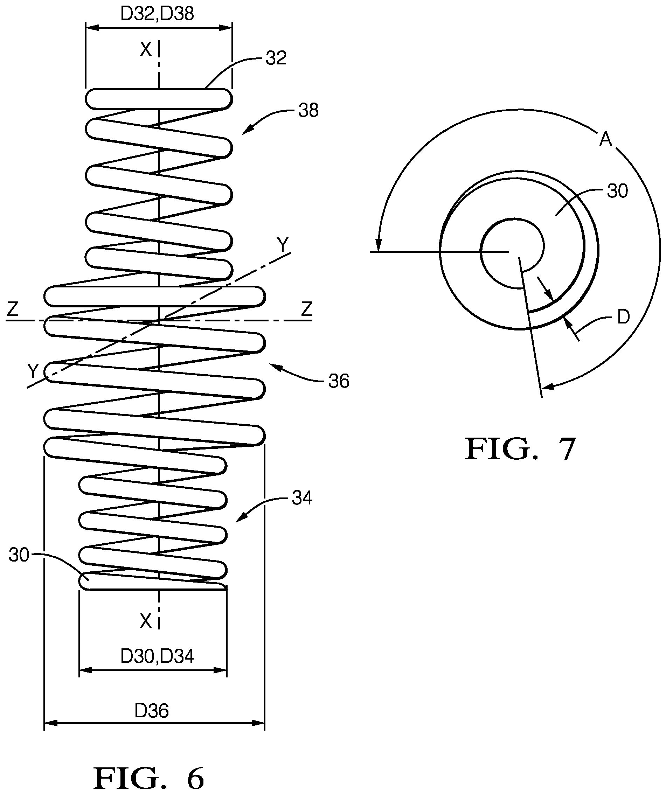

Dans une seconde alternative au premier mode de réalisation comme décrit dans les figures 6 et 7, la première portion extrême de spires 34 du ressort comprend la première spire 30 et plusieurs spires immédiatement consécutives à la première spire 30. Le diamètre d'enroulement D34 des spires de la première portion extrême de spires 34 est égal au diamètre d'enroulement D30 de la première spire 30. Le ressort 24 est symétrique par rapport à un plan (Y, Z) passant par le milieu du ressort 24 et perpendiculaire à l'axe longitudinal X. La deuxième portion extrême de spires 38 du ressort comprend la dernière spire 32 et plusieurs spires immédiatement antécédentes à la dernière spire 32. Le diamètre d'enroulement D34 des spires de la deuxième portion extrême de spires 38 est égal au diamètre d'enroulement D32 de la dernière spire 32. Le diamètre d'enroulement D34 de la première portion de spires 34 et le diamètre d'enroulement D38 de la deuxième portion de spires sont inférieurs d'une distance D d'au moins 0,2 mm du diamètre d'enroulement D36 de la portion centrale de spires 36 comme représenté dans la figure 7. La première spire 30 et la dernière spire 32 sont courbées vers l'intérieur d'une longueur angulaire A égale aux derniers 270 degrés.

Dans un second mode de réalisation comme décrit dans les figures 4 et 5 la première portion extrême de spires 34 comprend une spire qui est la première spire 30 du ressort 24 au contact avec l'armature 28 magnétique. La première spire 30 est aplanie selon le plan (Y, Z) perpendiculaire à l'axe longitudinal X du ressort 24. De même la deuxième portion extrême de spires 38 comprend une spire qui est la dernière spire 32 au contact du pion 25.

Dans une alternative au deuxième mode de réalisation, la dernière spire 32 est aplanie sur le plan (Y, Z). La réalisation de la forme aplanie de la première spire 30 et de la dernière spire 32 est faite par rectification.

En fonctionnement, l'injecteur 10 comprend une aiguille 16 coulissante dans un alésage. Le mouvement de l'aiguille 16 est contrôlé à l'aide de deux chambres, une chambre à haute pression 18 de commande et une chambre à basse pression 42, qui communique avec le réservoir de vidange à basse pression (non représenté). Lorsque débute l'injection, l'actionneur 12, est alimenté électriquement lors de l'étape d'ouverture, ce qui engage l'armature 28 et latige 44 fixé à l'armature 28 situés dans la chambre à basse pression 42 à se déplacer vers le haut contre l'action du ressort 24 de bobine, soulevant la tige 44 loin de son siège. En conséquence, le carburant peut s'échapper de la chambre à haute pression 14 de commande vers la chambre à basse pression 42 par un passage de retour (non représenté). Comme représenté dans la figure 1, l'actionneur 12 électromagnétique comprend l'ensemble de bobine 20 fixe, l'armature 28 magnétique mobile se déplaçant vers l'ensemble de bobine 20 lorsque celle-ci est électriquement alimentée et le ressort 24 repoussant en permanence l'armature magnétique 20 vers une position éloignée de la bobine 26.

### LISTE DES REFERENCES UTILISEES

- 10: injecteur
- 12: actionneur
- 14: corps
- 16: aiguille
- 18: chambre haute pression
- 20: ensemble de bobine
- 22: trou borgne
- 24: ressort
- 25: pion
- 26: fond du trou borgne
- 28: armature
- 30: premiere spire du ressort
- 32: derniere spire du ressort
- 34: portion extrême de spires
- 36: portion centrale de spires
- 38: deuxième portion extrême de spires
- 42: chambre basse pression
- 44: tige
- D30: diamètre de la première spire
- D32: diamètre de la deuxième portion
- D34: diamètre de la dernière spire
- D36: diamètre de la deuxième portion
- D38: diamètre de la troisième portion
- X: Axe
- Y: Axe
- Z: Axe
- Y, Z: Plan
- D: distance
- A: longueur angulaire

## Revendications

1. Injecteur (10) de carburant d'un moteur à combustion interne, l'injecteur (10) s'étendant le long d'un axe principal (X) et comprenant
- un ensemble de bobine (20) surmoulé pourvu d'un trou borgne (22) axial s'étendant vers l'intérieur de l'ensemble de bobine (20),
- un ressort (24) hélicoïdal axialement comprimé dans le trou borgne (22) entre un pion (25) et une tige (44) traversant une armature magnétique (28), **caractérisé en ce que** le diamètre d'enroulement (D30) d'une première spire (30) du ressort (24) en contact avec la tige (44) traversant l'armature magnétique (28) est inférieur au diamètre d'enroulement (D36) de la portion centrale de spires (36) du ressort (24), dans lequel la première spire (30) est courbée vers l'intérieur d'une longueur angulaire (A) égale aux derniers 270 degrés.

2. Injecteur (10) selon la revendication 1 dans lequel le diamètre d'enroulement (D30) de la première spire (30) est inférieur d'une distance (D) d'au moins 0,2 mm du diamètre d'enroulement (D36) de la portion centrale de spires (36).

3. Injecteur (10) selon l'une quelconque des revendications 1 à 2 dans lequel la première spire (30) en contact avec l'armature magnétique (28) est aplanie selon un plan (Y, Z) perpendiculaire à l'axe principal (X) du ressort (24).

4. Injecteur (10) selon l'une quelconque des revendications 1 à 3 dans lequel une première portion extrême de spires (34) du ressort comprend la première spire (30) et plusieurs spires immédiatement consécutives à la première spire (30), le diamètre d'enroulement (D34) des spires de la première portion extrême de spires (34) est égal au diamètre d'enroulement (D30) de la première spire (30).

5. Injecteur (10) selon l'une quelconque des revendications 4 dans lequel le nombre de spires de la première portion extrême de spires (34) du ressort est compris entre 2 et 10 spires.

6. Injecteur (10) selon l'une quelconque des revendications 1 à 5 dans lequel le ressort (24) est symétrique par rapport au plan (Y, Z) passant par le milieu du ressort (24).

## Patentansprüche

1. Kraftstoffinjektor (10) eines Verbrennungsmotors, wobei sich der Injektor (10) entlang einer Hauptachse (X) erstreckt und enthält:
- eine umspritzte Spulenanordnung (20), die mit einem axialen Sackloch (22) versehen ist, das sich nach innen in die Spulenanordnung (20) erstreckt,
- eine Schraubenfeder (24), die in dem Sackloch (22) zwischen einem Zapfen (25) und einem durch einen Magnetanker (28) hindurch verlaufenden Stift (44) axial zusammengedrückt wird,
**dadurch gekennzeichnet, dass** der Wicklungsdurchmesser (D30) einer ersten Windung (30) der Feder (24) in Kontakt mit dem durch den Magnetanker (28) hindurch verlaufenden Stift (44) kleiner ist als der Wicklungsdurchmesser (D36) des Windungsmittelabschnitts (36) der Feder (24), wobei die erste Windung (30) um eine Winkellänge (A) einwärts gebogen ist, die den letzten 270 Grad entspricht.

2. Injektor (10) nach Anspruch 1,
wobei der Wicklungsdurchmesser (D30) der ersten Windung (30) um eine Entfernung (D) von mindestens 0,2 mm kleiner ist als der Wicklungsdurchmesser (D36) des Windungsmittelabschnitts (36).

3. Injektor (10) nach einem der Ansprüche 1 bis 2,
wobei die erste Windung (30) in Kontakt mit dem Magnetanker (28) in einer Ebene (Y, Z) senkrecht zur Hauptachse (X) der Feder (24) abgeflacht ist.

4. Injektor (10) nach einem der Ansprüche 1 bis 3,
wobei ein erster Windungsendabschnitt (34) der Feder die erste Windung (30) und mehrere Windungen unmittelbar nach der ersten Windung (30) aufweist, wobei der Wicklungsdurchmesser (D34) der Windungen des ersten Windungsendabschnitts (34) gleich dem Wicklungsdurchmesser (D30) der ersten Windung (30) ist.

5. Injektor (10) nach einem der Ansprüche 4, wobei die Anzahl der Windungen des ersten Windungsendabschnitts (34) der Feder zwischen 2 und 10 Windungen beträgt.

6. Injektor (10) nach einem der Ansprüche 1 bis 5,
wobei die Feder (24) symmetrisch in Bezug auf die Ebene (Y, Z) ist, die durch die Mitte der Feder (24) verläuft.

## Claims

1. Fuel injector (10) for an internal combustion engine, the injector (10) extending along a main axis (X) and comprising
- an overmoulded coil assembly (20) provided with an axial blind hole (22) extending towards the inside of the coil assembly (20),
- a helical spring (24) axially compressed in the blind hole (22) between a pin (25) and a stem (44) passing through a magnetic armature (28),
**characterized in that** the winding diameter (D30) of a first turn (30) of the spring (24) in contact with the stem (44) passing through the magnetic armature (28) is smaller than the winding diameter (D36) of the central portion of turns (36) of the spring (24), wherein the first turn (30) is curved inwards by an angular length (A) equal to the last 270°.

2. Injector (10) according to Claim 1, wherein the winding diameter (D30) of the first turn (30) is less by a distance (D) of at least 0.2 mm than the winding diameter (D36) of the central portion of turns (36).

3. Injector (10) according to either one of Claims 1 and 2, wherein the first turn (30) in contact with the magnetic armature (28) is flattened along a plane (Y, Z) perpendicular to the main axis (X) of the spring (24).

4. Injector (10) according to any one of Claims 1 to 3, wherein a first end portion of turns (34) of the spring comprises the first turn (30) and several turns immediately consecutive with the first turn (30), the winding diameter (D34) of the turns of the first end portion of turns (34) is equal to the winding diameter (D30) of the first turn (30).

5. Injector (10) according to any one of Claims 4, wherein the number of turns in the first end portion of turns (34) of the spring is comprised between 2 and 10 turns.

6. Injector (10) according to any one of Claims 1 to 5, wherein the spring (24) is symmetrical with respect to the plane (Y, Z) passing through the middle of the spring (24).
